# EUROPEAN PATENT APPLICATION

(11) **EP 1 584 244 A1**
(43) Date of publication of application: **12.10.2005**
(21) Application number: 04702829.5
(22) Date of filing: 16.01.2004
(51) Int. Cl.: A23L 1/19, A23D 7/00

(54) **O/W EMULSION AND PROCESS FOR PRODUCING FOOD WITH THE SAME**

(30) Priority: 16.01.2003 JP 2003008895
(71) Applicant: Fuji Oil Company, Ltd., Osaka 542-0086 (JP)
(72) Inventor: Harada,Eriko; Fuji Oil Co. Ltd. Tsukuba R&D Center, Ibaraki 3002436 (JP); Morikawa K.; Fuji Oil Co., Ltd. Tsukuba R&D Center, Ibaraki 3002436 (JP)
(74) Representative: Hayes, Adrian Chetwynd
(86) International application number: PCT/JP2004/000347
(87) International publication number: WO 2004/062384

(57) **Abstract**

A whipping cream which retains milky flavor/body taste and material properties and combines inconsistent functions, i.e., good meltability in the mouth and thermal stability in shape retention/unsusceptibility to water separation, is obtained by a relatively easy method. An O/W emulsion for whipping creams (referred to as "low-water-content emulsion") is provided. When added to a whipping cream, the emulsion not only can enhance milky flavor and body taste but also enables the cream to reconcile good meltability in the mouth with thermal stability in shape retention/unsusceptibility to water separation.

## Description

### Technical Field

The present invention relates to a process for producing an O/W emulsion capable of whipping and modification by mixing with an aqueous composition, or as such, and a process for producing a whipped fat composition.

### Background Art

Although fresh cream is superior in tastes such as milky flavor and body taste, as for a whipping fat composition (hereinafter, sometimes, referred to as whipping cream), there is a great fluctuation in quality such as a composition and physical properties, and it is unstable and inferior in workability. In addition, its cost was not cheap. In order to overcome these defects, whipping cream having stable physical properties has been produced using vegetable fat. However, since milky flavor and body taste derived from milk fat is decreased, its flavor has tended to be weakened. When a solid content is increased for supplementing the weakened flavor with milk solids and the like, there are problems that viscosity is increased and the whipping cream tends to be hardened.

Further, in the above-described whipping cream having stable physical properties, a certain type is studied to impart a specific function thereto according to a particular purpose. However, among the functions, good meltability in the mouth and thermal stability (at normal temperature or slightly warmed state) in shape retention/thermal unsusceptibility (ditto) to water separation (syneresis) are inconsistent functions, and there is a limitation in combination of these functions. That is, when a commercial product is designed from the viewpoint of good meltability in the mouth, thermal stability in shape retention/thermal unsusceptibility to water separation are sacrificed. To the contrary, when a commercial product is designed from the viewpoint of good thermal stability in shape retention/thermal unsusceptibility to water separation, sacrifice of meltability in the mouth cannot be avoided.

Various techniques have been hitherto studied for combining these inconsistent functions of whipping cream, and fresh cream together with vegetable cream are often used (see edited by Yousuke NOGUCHI, "Knowledge of Milk and Milk Products", published by SAIWAI Shobo Co., January 30, 19998, pages 64-67). Although these can compensate respective defects, body taste, flavor, physical properties and costs remain at about intermediate between fresh cream and vegetable cream.

Further, in addition to the above, JP 9-019266 A proposes water-in-oil emulsion type cream which combines temperature stability in shape retention, meltability in the mouth and flavor by mixing tempering type chocolate, to which tempering treatment has been applied, at 20 to 35°C. However, in this case, the cream is a water-in-oil type and further, the tempering treatment of the tempering type chocolate is required. Further, JP 9-140332 A proposes a technique of water-containing chocolate having a stable emulsified state, good flavor and good meltability in the mouth, wherein chocolate and an aqueous composition are emulsified into a water-in-oil type in the presence of a lipophilic polyglycerin fatty acid ester composed of polyglycerin having a degree of polymerization of 2 to 15 and a fatty acid residue having 20 to 26 carbon atoms. In this case, the emulsion is also a water-in-oil type and the addition of the emulsifier is required.

As for an oil-in-water type, JP 10-179070 A proposes a whipping oil-in water emulsion and whipped cream which are superior in shape retention, unsusceptibility to water separation and stability of tissue and can maintain good mouthfeel, wherein a proportion of monosaccharide and/or sugar alcohol of monosaccharide, disaccharide and/or sugar alcohol of disaccharide, and oligosaccharide having a chain length of trisaccharide or more and/or sugar alcohol of oligosaccharide is controlled in a specific range, or a content of sorbitol or maltose is controlled in a specific range relative to the total amount of sugar and/or sugar alcohol, and the amount of sugar and/or sugar alcohol is controlled in a specific range in terms of a solid content in an aqueous phase. However, the amount of sugar and/or sugar alcohol is restricted and its function is far from imparting milky flavor, body taste, and the like.

Furthermore, JP 11-056281 A proposes an oil-in-water emulsion having good flavor, body taste, texture and juicy mouthfeel without using a stabilizer, wherein an oil-in-water type emulsion containing caseinate, egg yolk oil and non-fat milk solids in given amounts is mixed with an emulsion containing milk fat. However, this technique requires caseinate and egg yolk oil, and is far from imparting thermal stability in shape retention and unsusceptibility to water separation.

Various further techniques have also been studied, but it has been difficult to obtain whipping cream which combines inconsistent functions such as milky flavor/body taste and physical properties, and good melting in the mouth and thermal stability in shape retention/unsusceptibility to water separation, by a relatively easy method.

### Disclosure of the Invention

The present invention is to obtain whipping cream with improving or without damaging a taste such as milky flavor and body taste, and with minimizing problems of increase in viscosity and hardening upon addition of solids by adding an O/W type emulsion for whipping cream to an aqueous composition, and further, preferably, with reconciling good melting in the mouth with thermal stability in shape retention and unsusceptibility to water separation by selecting fat; and to obtain an O/W type emulsion for whipping cream which has whipping property as such.

The present inventors have studied intensively to achieve the above-described objects, and as a result, have completed the present invention.

That is, the present invention is:
(1) An O/W emulsion comprising 10 to 50% by weight of a fat ingredient, 10 to 50% by weight of water and 10 to 70% by weight of non-fat solids;
(2) The O/W emulsion according to (1), wherein the proportion of non-fat milk solids or non-fat cacao solids to total non-fat solids is 5 to 50% by weight;
(3) The O/W emulsion according to (1), wherein fat in the fat ingredient comprises a hard butter or triglycerides represented by SUS (S: saturated fatty acid, U: unsaturated fatty acid free from a trans isomer);
(4) The O/W emulsion according to (1), which is to be used for addition to an aqueous composition;
(5) The O/W emulsion according to (4), wherein the aqueous composition is a milk product;
(6) The O/W emulsion according to (4), wherein the aqueous composition is a whipping fat composition;
(7) The O/W emulsion according to (1), which is to be used by whipping;
(8) A process for producing a diluted O/W emulsion, which comprises adding the O/W emulsion according to (1) to an aqueous composition;
(9) The process according to (8), wherein the aqueous composition is a milk product;
(10) The process according to (8), wherein the aqueous composition is a whipping fat composition;
(11) A process for producing a whipped fat composition, which comprises adding the O/W emulsion according to (1) to an aqueous composition and whipping the resulting mixture; and
(12) A process for producing a whipped fat composition, which comprises whipping the O/W emulsion according to (1).

### Best Mode for Carrying Out the Invention

Hereinafter, the present invention will be illustrated in detail. Sometimes, the above-described "O/W emulsion" is referred to as a "low-water-content emulsion" to avoid confusion with a whipping fat composition and a whipped fat composition. In addition, as mentioned above, sometimes, a whipping fat composition is simply referred to as whipping cream.

Since the low-water-content emulsion of the present invention is an emulsion having a low water content (50% or less) in comparison with the whipping fat composition, it scarcely suppresses the whipping property of whipping cream, and mitigates drawbacks such as increase in viscosity and hardening even when it acts on whipping cream to increase solids thereof.

However, when the fat ingredient of the low-water-content emulsion is less than 10%, it lowers the whipping property of whipping cream to which the low-water-content emulsion has been added, thereby weakening the shape retention of cream after whipping. On the other hand, when the fat ingredient exceeds 50%, emulsification of the low-water-content emulsion becomes unstable and stable production of cream is hardly expected. The fat ingredient is preferably 15% or more, and 40% or less.

The fat of the low-water-content emulsion of the present invention is not specifically limited, and can obtain an effect on improvement of tastes together with its low water content, irrespective of a kind of fat.

However, desirably, the fat in the fat ingredient is hard butter in order to strongly impart good meltability in the mouth, thermal stability in shape retention and unsusceptibility to water separation.

In general, hard butter is fat having such nature that its solid fat content is relatively rapidly lowered by raising a temperature from normal temperature to a temperature zone in the vicinity of body temperature, and is used for production of chocolate.

Further, in order to further improve a whipping function strongly, more preferably, fat in the fat ingredient contains triglycerides represented by SUS (S: saturated fatty acid, U: unsaturated fatty acid free from a trans isomer). Desirably, the above-described SUS (suitably, SOS; O is oleic acid) is contained in an amount of preferably 45% or more, more preferably 70% or more based on the fat ingredient because the function to impart good meltability in the mouth, thermal stability in shape retention, unsusceptibility to water separation and whipping property are improved with increase in SUS.

Examples of the fat containing a lot of triglycerides represented by the above-described SUS include cacao butter, shea butter, mango kernel oil, sal fat, illipe fat, palm oil and fractionated oil thereof, etc. One or more thereof can be selected and used. Further, the fat containing a lot of triglycerides represented by SUS to be used can be produced by selective interesterification of 1,3-positions of the triglycerides and if necessary, fractionation of a middle melting point fraction.

When the water content of the low-water-content emulsion of the present invention is less than 10%, the low-water-content emulsion increase viscosity and stable production is hardly expected. When it exceeds 50%, the emulsification of the low-water-content emulsion becomes unstable, which causes difficulty in unstable production and inferior workability of whipping cream, thermal stability in shape retention and thermal unsusceptibility to water separation after adding the low-water-content emulsion to be whipped are weakened. Suitably, it can be used at a range of 10 to 40%.

The origin of water contained in the low-water-content emulsion is not specifically limited. It may be water originated from milk products containing milk solids, or water as a solvent or a dispersing medium when milk solids are dissolved or dispersed in water. In addition, one or more of water-containing foods such as fruit juice, jam, various fruits, sweetened bean pastes, cheese, nuts, natural honey, coffee, tea, etc., can be used alone or in combination. In this case, while there is no problem for developing taste functions such as body taste and thermal stability in shape retention, it is not so preferable to use such water-containing foods that damage a homogeneous appearance upon mixing the low-water-content emulsion with whipping cream, from the viewpoint of an appearance.

When non-fat solids in the low-water-content emulsion is 10% or less, the effect for imparting milky flavor and body taste to whipping cream is hardly expected, and when it is 70% or more, viscosity of the low-water-content emulsion is increased to cause difficulty in stable production. Suitably, the content of non-fat milk solids in the low-water-content emulsion is within a range of 20 to 60%.

Examples of the above-described non-fat solids include non-fat milk solids, non-fat cacao solids, sugars, and the like. The non-fat milk solids impart milky flavor and body taste to whipping cream, and non-fat cacao solids impart chocolate flavor and body taste.

The contents of the above-described non-fat milk solids and non-fat cacao solids are preferably 5 to 50% by weight based on the total non-fat solids.

Examples of the above-described non-fat solids include those originated from milk contained in fresh cream, milk, concentrated milk, defatted milk, condensed milk, evaporated milk, whole milk powder, skim milk powder, butter milk, butter milk powder, whey, whey powder, casein, casein sodium, lacto-albumin, etc. One or more thereof can be used alone or in combination.

The above-described non-fat cacao solids are those originated from cacao beans from which cocoa butter is excluded. Examples of the source of non-fat cacao include cacao mass, cocoa powder, various chocolates obtained by using these as raw materials, and other processed products thereof.

The sugars are not specifically limited, and examples thereof includes sugars such as glucose, fructose, sucrose, maltose, enzymatically saccharified starch syrup, lactose, reducing starch saccharified product, isomerized liquid sugar, sucrose bound starch syrup, oligosaccharides, reducing sugar polydextroses, sorbitol, reducing lactose, trehalose, xylose, xylitol, multitol, erythritol, mannitol, fracto-oligosaccharides, soy bean oligosaccharides, galacto-oligosaccharide, lacto-oligosaccharides, raffinose, lactulose, palatinose oligosaccharides, stevia, aspartame, sugar alcohols, and the like. They can be used alone or in combination of two or more thereof.

Further, the low-water-content emulsion of the present invention contains preferably a stabilizer, and as the stabilizer, any known raw materials for producing a whipping fat composition can be used. Examples of the stabilizer include salts of phosphoric acid (hexamethaphosphoric acid, dihydrogen phosphoric acid, monohydrogen phosphoric acid), alkali metal (potassium, sodium, etc.) salts of citric acid, guar gum, xanthane gum, tamarind gum, carrageenan, arginates, furcellaran, locust bean gum, pectin, curdlan, starch, modified starch, crystalline cellulose, gelatin, dextrin, agar, dextran, and the like. These stabilizers can be used alone or in combination of two or more thereof. The content of the above-described stabilizer is preferably 0 to 2.0% by weight, more preferably 0.01 to 1.0% by weight based on the low-water-content emulsion of the present invention.

Further, an emulsifier can be used for the low-water-content emulsion. The kind of the emulsifier is not specifically limited so far as it stabilizes fat, water and non-fat solids. Examples thereof include phospholipids such as lecithin, phosphatidylcholine, etc.; fatty acid esters of glycerin such as monoglycerides and diglycerides; organic acid partial glycerides such as acetate-fatty acid ester of glycerin, lactate-fatty acid ester of glycerin, succinate-fatty acid ester of glycerin, tartarate-fatty acid ester of glycerin, etc.; fatty acid esters of sorbitan; sucrose fatty acid esters; sucrose acetate isolactate; fatty acid esters of polyglycerin; ricinoleic acid ester of polyglycerin condensate; fatty acid esters of propylene glycol; calcium stearoyl lactate; sodium stearoyl lactate; polyoxyethylene sorbitan monostearate; polyoxyethylene sorbitan monoglyceride, and the like. These can be used alone or in combination of two or more thereof. In general, HLB of the emulsifier is 1 to 10, preferably 2 to 7, and the content of the emulsifier is 0.01 to 2% by weight, preferably 0.5 to 1% by weight based on the low-water-content emulsion of the present invention.

If necessary, the low-water-content emulsion may contain a flavoring agent, a colorant, a preservative, an antioxidant, a pH adjuster, and the like. The relation of the amounts of the fat ingredient, water and non-fat solids described above renders the emulsion low water content as compared with known whipping cream and renders the emulsion high oil content as compared with condensed milk.

The main production processes of the emulsion will be illustrated hereinafter.

That is, the first production process of the low-water-content emulsion of the present invention includes production of a powder of chocolate or a chocolate-like food or melted dough thereof from the above-described non-fat solids and all or a part of the above-described fat according to chocolate production. Then, an aqueous composition which may contain the above-described non-fat solids and fat is added thereto and the mixture is emulsified. The production of the chocolate-like food is not specifically limited in so far as it does not greatly deviate from conventional chocolate production, and conching can be carried out after refining by rolls.

Alternatively, as another production process, the above-described non-fat solids and the above-described fat are mixed with an aqueous composition, and then the mixture is warmed to 30 to 70°C, or one of them or both are warmed to 30 to 70°C, followed by mixing them. The resultant mixture is mixed either by a mild stirring system such as manual stirring, or by a high speed stirring system which can apply strong shearing force, for example, a homomixer, etc. If necessary, homogenization treatment (5 to 150 kg/cm²) may be carried out for emulsification.

The low-water-content emulsion which has been subjected to the above-described emulsification treatment is cooled. Pasteurization or sterilization may be carried out before or after the emulsification treatment or homogenization treatment. Since an applicable viscosity range is narrow in a conventional production line of cream in which UHT treatment is carried out, and there is a tendency to increase viscosity, pasteurization at a low temperature is recommended.

Further, even if SUS type triglycerides which are apt to demulsify and to cause hardening is used, the emulsion can be produced according to the above -described steps.

Next, the aqueous composition to which the low-water-content emulsion of the present invention is added will be illustrated.

The low-water-content emulsion obtained as described above can be used for addition to the aqueous composition, in particular, for modification of the whipping fat composition (whipping cream) to produce the whipped fat composition.

The aqueous composition of the present invention can be used together with not only whipping fat compositions such as various commercially available fresh cream and vegetable cream products, but also milk products having no whipping capability such as milk, concentrated milk and cheese, O/W emulsions such as soybean milk and nuts paste, etc., and water-containing foods other than emulsions such as jam, various fruits, sweetened bean pastes, natural honeys, coffee, tea, etc. as well as water. One or more thereof can be used and they are not specifically limited. Conventional techniques and other known techniques can be used for producing the composition.

Body taste can be imparted to milk products which essentially have no whipping capability; O/W emulsions, water-containing foods water, and the like by simply mixing with the low-water-content emulsion, and the mixture can also be whipped by stirring.

When the emulsion is added to a whipping fat composition being poor in body taste and milky flavor, body taste and milky flavor are improved, and when the emulsion is added to a whipping fat composition whose meltability in the mouth is good but thermal stability in shape retention and thermal unsusceptibility to water separation are inferior, or vice versa, demerit functions can be supplemented without damaging merits.

However, as described with respect to the fat in the low-water-content emulsion, it is preferable that the fat in the fat ingredient is hard butter in order to strongly impart meltability in the mouth, thermal stability in shape retention and thermal unsusceptibility to water separation, and further, it is more preferable that the fat in the fat ingredient contains triglycerides represented by SUS in order to strongly impart a whipping function.

The content of the low-water-content emulsion of the present invention in whipped cream is 5% by weight or more and more preferably 10 to 50% by weight, and when the content is small, the effect for modifying whipping cream is hardly expected.

The timing of adding the low-water-content emulsion to whipping cream may be either of before or during whipping, rather than after whipping.

Further, the low-water-content emulsion as such can be whipped.

### Examples

The following Examples and Comparative Examples further illustrate the present invention in detail, but the present invention is not limited to these Examples.

### Example 1

According to a conventional method of chocolate production, a white chocolate-like food was produced by formulating whole milk powder, sugar, tempering type hard butter as a vegetable fat (trade name, "MELANO NEWSS-5" manufactured by Fuji Oil Company, Limited) and lecithin as shown in Table 1. The chocolate-like food obtained by the above-described operation was pulverized. The pulverized product together with maltose (trade name, "SUNMALT-SHIRO" manufactured by HAYASHIBARA Co., Ltd.) were added to and mixed with a 3-fold concentrated milk type food (trade name "PROBEST 400F" manufactured by Fuji Oil Company, Limited) which was warmed at 30°C, water and an emulsifier (trade name, "RYOTO Sugar Ester S570"' manufactured by Mitsubishi Chemical Foods Co., Ltd., HLB 5) according to the formulation shown in Table 1.

The mixture was stirred at 3,000 rpm with a homomixer ("T.K.HOMODISPER" manufactured by TOKUSYU KIKA KOUGYO Co., Ltd.) while warming, maintained at 65°C for 30 minutes and then cooled to obtain a low-water-content emulsion containing 25.6% by weight of a fat ingredient, 51.5% by weight of non-fat solids (non-fat milk solids were 16.5%) and 23.3% by weight of water.

The low-water-content emulsion thus obtained and a commercially available whipping cream (trade name, "LIGHT TOPPING SV" manufactured by Fuji Oil Company, Limited) were mixed at a proportion of 20:80, and whipped with a vertical mixer ("HOBART MIXER-N-50" manufactured by HOBART JAPAN K.K.).

The above-described whipping cream is such a type that it is generally used by mainly taking its functions into consideration and mainly composed of vegetable fat, and has good workability, though milky flavor and body taste are slightly inferior. Hereinafter, sometimes, it is referred to as a "whipping cream (function conscious type)".

### Comparative Example 1

Only 100% by weight of the above-described whipping cream (function conscious type) was whipped with a vertical mixer and without addition of the low-water-content emulsion.

### Comparative Example 2

The above-described whipping cream (function conscious type) composed of vegetable fat and fresh cream (trade name "HIGH FRESH NM" manufactured by Fuji Oil Company, Limited) were mixed at a proportion of 50:50, and whipped with a vertical mixer.

### Comparative Example 3

Only 100% by weight of fresh cream was whipped with a vertical mixer.

**Table 1**

| | Example 1 | Comparative Example 1 | Comparative Example 2 | Comparative Example 3 |
|---|---|---|---|---|
| <Formulation of chocolate-like food> | | | | |
| Whole milk powder | 30.0 | | | |
| Sugar | 40.0 | | | |
| Vegetable fat | 30.0 | | | |
| Lecithin | 0.5 | | | |

| <Formulation of O/W emulsion> | | | | |
|---|---|---|---|---|
| Above-described chocolate-like food | 65.0 | | | |
| Maltose | 8.0 | | | |
| 3-Fold concentrated | 10.0 | | | |
| milk type food | | | | |
| Water | 17.0 | | | |
| Emulsifier | 0.2 | | | |

| <Formulation of final product> | | | | |
|---|---|---|---|---|
| O/W emulsion | 20.0 | | | |
| Whipping cream | | | | |
| (function conscious | 80.0 | 100.0 | 50.0 | |
| type) | | | | |
| Fresh cream | | | 50.0 | 100.0 |

With respect to the respective whipped compositions thus obtained, the workability, thermal stability in shape retention, thermal unsusceptibility to water separation, milky flavor, body taste and meltability in the mouth were evaluate according to evaluation methods as described below.

The results are shown in Table 2.

**Table 2**

| | Example 1 | Comparative Example 1 | Comparative Example 2 | Comparative Example 3 |
|---|---|---|---|---|
| Workability | 4 | 5 | 4 | 3 |
| Thermal stability | 5 | 4 | 4 | 4 |
| in shape retention | | | | |
| Thermal | | | | |
| unsusceptibility to | 5 | 3 | 4 | 4 |
| water separation | | | | |
| Milky flavor and | 4 | 3 | 4 | 5 |
| body taste | | | | |
| Meltability in the | 4 | 3 | 4 | 4 |
| mouth | | | | |

### Evaluation methods

Workability: The length maintaining a state capable of forming nappe and squeezing during whipping, and further, the length maintaining a soft state capable of forming nappe and squeezing after completion of whipping.

Thermal stability in shape retention: A degree of shape retention of an imitation flower made of the whipped cream with a squeezing bag upon allowing it to stand for 20 hours in an incubator at 20°C.

Thermal unsusceptibility to water separation: A degree of water separation of an imitation flower made of the whipped cream with a squeezing bag upon allowing it to stand for 20 hours in an incubator at 20°C.

Milky flavor: Sensitivity of milky flavor and body taste upon putting the whipped cream in the mouth.

Meltability in the mouth: Meltability upon putting the whipped cream in the mouth.

The evaluation was carried out with a score of 1 to 5 points. As for workability, thermal stability in shape retention, thermal unsusceptibility to water separation, and milky flavor and body taste, 5 is good to 1 is bad, respectively, and 2 or less score is regarded as no commercial value.

As for the production costs of the respective whipped cream, Comparative Example 3 was the highest, and Comparative Example 2 was higher than those of the products of Example 1 and Comparative Example 1.

Although whipping cream to be used by mainly taking its function into consideration had essentially weak milky flavor and body taste, as seen from Example 1 and Comparative Example 1 in Table 2, the whipping cream having normal milky flavor and body taste, and having improved shape retention was obtained by addition of the low-water-content emulsion of this Example.

Further, although it was possible to improve workability, to maintain the taste to a certain degree and to impart good shape retention by mixing and using whipping cream together with fresh cream as in Comparative Example 2, the whipped cream having equal or superior functions, and further having cost merit was obtained by using the low-water-content emulsion of the present invention.

### Example 2

According to a conventional method, a chocolate-like food was produced by formulating powdered skim milk, sugar, cocoa butter as vegetable fat, and lecithin as shown in Table 3. The chocolate-like food obtained by the above-described operation together with cocoa butter (trade name "COCOA BUTTER" manufactured by Fuji Oil Company, Limited) were pulverized, and the pulverized product was added to and mixed with water warmed to 30°C, reducing starch syrup (trade name, "Amameal" manufactured by TOWA Chemical Industry Co., Ltd.) and an emulsifier (trade name, "RYOTO Sugar Ester S570" manufactured by Mitsubishi Chemical Foods Co., Ltd.) according to the formulations in Table 3.

The above-described mixture was stirred at 3,000 rpm with a homomixer ("T.K.HOMODISPER" manufactured by TOKUSYU KIKA KOUGYO Co., Ltd.) while warming, maintained at 65°C for 30 minutes and then cooled to obtain a low-water-content emulsion containing 45.0% by weight of a fat ingredient, 46.2% by weight of non-fat solids (non-fat milk solids were 8.4%) and 18.8% by weight of water.

The low-water-content emulsion thus obtained and whipping cream composed of vegetable fat (trade name "M WHIP 400" manufactured by Fuji Oil Company, Limited) were mixed at a proportion of 30:70 and whipped with a vertical mixer ("HOBART MIXER N-50" manufactured by HOBART JAPAN K.K.).

The above-described whipping cream is such a type that it is generally used by mainly taking its taste into consideration, and has good milky flavor and body taste, though the shape retention and unsusceptibility to water separation are slightly inferior. Hereinafter, sometimes, it is referred to as a "whipping cream (flavor conscious type)".

### Comparative Example 4

Only 100% by weight of the above-described whipping cream (flavor conscious type) was whipped with a vertical mixer and without adding the low-water-content emulsion.

### Comparative Example 5

Only 100% by weight of whipping cream (trade name, "M WHIP 1200" manufactured by Fuji Oil Company, Limited) was whipped with a vertical mixer and without addition of the low-water-content emulsion.

The above-described whipping cream is such a type that it is generally used by mainly taking the shape retention into consideration, and has good shape retention, though milky flavor and body taste are slightly inferior. Hereinafter, sometimes, it is referred to as whipping cream (shape retention conscious type).

**Table 3**

| | Example 2 | Comparative Example 4 | Comparative Example 5 |
|---|---|---|---|
| <Formulation of chocolate-like food> | | | |
| Powdered skim milk | 12.0 | | |
| Sugar | 38.0 | | |
| Cocoa butter | 50.0 | | |
| Lecithin | 0.5 | | |

| <Formulation of O/W emulsion> | | | |
|---|---|---|---|
| Above-described chocolate-like food | 70.0 | | |
| Cocoa butter | 10.0 | | |
| Reducing starch syrup | 16.0 | | |
| Water | 14.0 | | |
| Emulsifier | 0.2 | | |

| <Formulation of final product> | | | |
|---|---|---|---|
| O/W emulsion | 70.0 | | |
| Whipping cream (flavor conscious type) | 30.0 | 100.0 | |
| Whipping cream (shape retention conscious type) | | | 100.0 |

With respect to the respective whipped cream thus obtained, the workability of production process, thermal stability in shape retention, thermal unsusceptibility to water separation, milky flavor, body taste, meltability in the mouth and cost of the product was evaluated by the similar evaluation method as in Example 1.

The results are shown in Table 4.

**Table 4**

| | Example 2 | Comparative Example 4 | Comparative Example 5 |
|---|---|---|---|
| Workability | 4 | 4 | 4 |
| Thermal stability in shape retention | 5 | 3 | 5 |
| Thermal unsusceptibility to water separation | 4 | 3 | 5 |
| Milky flavor | 5 | 5 | 3 |
| Body taste and meltability in the mouth | 5 | 4 | 3 |

With respect to the production costs of the respective whipped cream, the product of Comparative Example 5 was higher as compared with those of Example 2 and Comparative Example 4.

Although whipping cream to be used by mainly taking its taste such as milky flavor and body taste into consideration had essentially weak shape retention and unsusceptibility to water separation, as seen from Example 2 and Comparative Example 4 in Table 4, the whipping cream having a taste equal to or superior to that of the flavor conscious type whipping cream, having shape retention equal to that of the shape retention conscious type whipping cream, and having good meltability in the mouth was obtained by using the low-water-content emulsion of the present invention.

### Example 3

This example shows a low-water-content emulsion obtained from fat and non-fat solids without employing production steps of a chocolate-like food.

As shown in Table 5, whole milk powder, sugar and tempering type hard butter (product's name "MELANO NEWSS-7" manufactured by Fuji Oil Company, Limited) as vegetable fat were formulated. Namely, whole milk powder (manufactured by YOTSUBA Inc.), sugar, vegetable fat (trade name, "MELANO NEWSS-7" manufactured by Fuji Oil Company, Limited, SUS content was 79.2%) were mixed with water warmed to 30°C, fructose and glucose liquid sugar (trade name, "HIGH FRACT M 75" manufactured by Nihon Cornstarch Corporation), a 3-fold concentrated milk type food (trade name, "PROBEST 400F" manufactured by Fuji Oil Company, Limited), and an emulsifier (trade name, "RYOTO Sugar Ester S570" manufactured by Mitsubishi Chemical Foods Co., Ltd.).

The above-described mixture was stirred at 3,000 rpm with a homomixer ("T.K.HOMODISPER" manufactured by TOKUSYU KIKA KOUGYO Co., Ltd.) with warming, maintained at 65°C for 30 minutes and then cooled to obtain a low-water-content emulsion containing 35.7% by weight a fat ingredient, 45.5% by weight of non-fat solids (non-fat milk solids were 10.3%) and 18.8% by weight of water. The low-water-content emulsion thus obtained and whipping cream (trade name, "M WHIP 950" manufactured by Fuji Oil Company, Limited) were mixed at a proportion of 20:80 and whipped with a vertical mixer ("HOBART MIXER-N-50" manufactured by HOBART JAPAN K.K.) .

The above-described whipping cream is such a type that it is generally used by mainly taking meltability in the mouth into consideration, and mainly composed of vegetable fat. It has good meltability in the mouth with cool mouthfeel, though the shape retention and unsusceptibility to water separation are slightly inferior. Hereinafter, it is referred to as a "whipping cream (meltability in the mouth conscious type)".

### Comparative Example 6

Only 100% by weight of the above-described whipping cream (meltability in the mouth conscious type) was whipped with a vertical mixer and without addition of a chocolate-like food.

### Comparative Example 7

Only 100% by weight of whipping cream (trade name, "M WHIP 370" manufactured by Fuji Oil Company, Limited) which was used in Comparative Example 5 was whipped with a vertical mixer and without addition of a chocolate-like food.

The above-described whipping cream is such a type that it is generally used by mainly taking thermal stability in shape retention and thermal unsusceptibility to water separation into consideration, and it has good thermal stability in shape retention and thermal unsusceptibility to water separation, though milky flavor and body taste are slightly inferior. Hereinafter, sometimes, it is referred to as a "whipping cream (thermal unsusceptibility to water separation conscious type)".

**Table 5**

| | Example 3 | Comparative Example 6 | Comparative Example 7 |
|---|---|---|---|
| <Formulation of O/W emulsion> | | | |
| Whole milk powder | 11.1 | | |
| Sugar | 27.1 | | |
| Vegetable oil and fat | 31.8 | | |
| Fructose and glucose liquid sugar | 10.0 | | |
| 3-Fold concentrated milk type food | 10.0 | | |
| Water | 10.0 | | |
| Emulsifier | 0.2 | | |

| <Formulation of final product> | | | |
|---|---|---|---|
| O/W emulsion | 20.0 | | |
| Whipping cream (meltability in the mouth conscious type) | 80.0 | 100.0 | |
| Whipping cream (shape retention conscious type) | | | 100.0 |

With respect to the respective whipping cream thus obtained, the workability, thermal stability in shape retention, thermal unsusceptibility to water separation, milky flavor, body taste, meltability in the mouth and cost were evaluated by the similar evaluation methods as in

### Example 1.

The results are shown in Table 6.

**Table 6**

| | Example 3 | Comparative Example 6 | Comparative Example 7 |
|---|---|---|---|
| Workability | 4 | 4 | 3 |
| Thermal stability in | 5 | 3 | 5 |
| shape retention | | | |
| Thermal unsusceptibility | 5 | 3 | 5 |
| to water separation | | | |
| Milky flavor and body taste | 4 | 4 | 3 |
| Meltability in the mouth | 5 | 5 | 3 |

As for production costs of the respective whipped cream, the product of Comparative Example 7 was higher than the products of Example 3 and Comparative Example 6.

Although whipping cream to be used by mainly taking meltability in the mouth into consideration had essentially weak shape retention and unsusceptibility to water separation, as seen from Example 3 and Comparative Example 6 in Table 6, the whipping cream having meltability in the mouth equal to that of the meltability in the mouth conscious type whipping cream, having shape retention and unsusceptibility to water separation equal to those of the shape retention conscious type whipping cream, and having good taste such as milky flavor and body taste was obtained by using the low-water-content emulsion of the present invention.

### Example 4

According to a conventional method, a chocolate-like food was produced by formulating whole milk powder and sugar as shown in Table 7. The fat used was vegetable fat (trade name "MELANO H1000S", hard butter manufactured by Fuji Oil Company, Limited) containing many trans isomers (among fatty acids having 18 carbon atoms and one double bond, trans isomers are 85% or more) was used.

Then, the chocolate-like food obtained by the above-described operation was pulverized and added to and mixed with water which was warmed at 30°C, a 3-fold concentrated milk (trade name, "PROBEST 400F" manufactured by Fuji Oil Company, Limited), reducing starch syrup (trade name, "Amameal" manufactured by TOWA Chemical Industry Co., Ltd.) and an emulsifier according to the formulations of Table 1.

The above-described mixture was stirred at 3,000 rpm with a homomixer ("T.K.HOMODISPER" manufactured by TOKUSYU KIKA KOUGYO Co., Ltd.) while warming, maintained at 65°C for 30 minutes and then cooled to obtain a low-water-content emulsion containing 27.7% by weight of a fat ingredient, 48.0% by weight of solids (non-fat milk solids were 11.0%) and 24.3% by weight of water.

The low-water-content emulsion thus obtained and whipping cream composed of vegetable fat (trade name, "LEGERE 20" manufactured by Fuji Oil Company, Limited) were mixed at a proportion of 80:20 and whipped with a vertical mixer ("HOBART MIXER-N-50" manufactured by HOBART JAPAN K.K.).

The above-described whipping cream is general compounding type whipping cream (i.e., cream to which vegetable fat has been added), and contains 20% of milk fat, and has average workability and shape retention and relatively good meltability in the mouth, though milky flavor and body taste are slightly inferior. Hereinafter, it is referred to as "whipping cream (medium fat compounding type)".

### Example 5

According to the same manner as that described in Example 4, a chocolate-like food was produced except that the vegetable fat was replaced with vegetable fat containing many SUS (trade name, "MELANO NEWSS7", manufactured by Fuji Oil Company, Limited) and the resulting food was whipped by the same operation to obtain a whipped product.

### Example 6

According to the same manner as that described in Example 4, a chocolate-like food was produced except that the vegetable fat was replaced with vegetable fat containing a relatively large amount of SUS and having a melting point relatively lower than that of the fat used in Example 5 (trade name, "MELBA 26", manufactured by Fuji Oil Company, Limited), and the resulting food was whipped by the same operation to obtain a whipped product.

### Comparative Example 8

Only 100% by weight of whipping cream composed of vegetable fat ("LEGERE 20" manufactured by Fuji Oil Company, Limited) was whipped with a vertical mixer and without addition of the low-water-content emulsion.

**Table 7**

| | Example 4 | Example 5 | Example 6 | Comparative Example 8 |
|---|---|---|---|---|
| <Formulation of chocolate-like food> | | | | |
| Whole milk powder | 18.5 | 18.5 | 18.5 | |
| Sugar | 45.2 | 45.2 | 45.2 | |
| MELANO H1000S | 36.3 | | | |
| MELANO NEWSS7 | | 36.3 | | |
| MELBA 26 | | | 36.3 | |

| <Formulation of O/W emulsion> | | | | |
|---|---|---|---|---|
| Above-described | 65.0 | 65.0 | 65.0 | |
| chocolate-like food | | | | |
| Reducing starch syrup | 10.0 | 10.0 | 10.0 | |
| Water | 15.0 | 15.0 | 15.0 | |
| 3-Fold concentrated milk type food | 10.0 | 10.0 | 10.0 | |
| Emulsifier | 0.2 | 0.2 | 0.2 | |

| <Formulation of final product> | | | | |
|---|---|---|---|---|
| O/W emulsion | 80.0 | 80.0 | 80.0 | |
| Whipping cream (medium milk fat compounding cream) | 20.0 | 20.0 | 20.0 | 100.0 |

With respect to the respective whipping cream thus obtained, the workability, thermal stability in shape retention, thermal unsusceptibility to water separation, milky flavor, body taste and meltability in the mouth were evaluated by the similar evaluation methods as in Example 1.

The results are shown in Table 8.

**Table 8**

| | Example 4 | Example 5 | Example 6 | Comparative Example 8 |
|---|---|---|---|---|
| Workability | 4 | 4 | 4 | 4 |
| Thermal stability in | 3 | 5 | 4 | 3 |
| shape retention | | | | |
| Thermal unsusceptibility | 3 | 5 | 4 | 3 |
| to water separation | | | | |
| Milky flavor | 5 | 5 | 5 | 4 |
| Body taste | 4 | 4 | 4 | 3 |
| Meltability in the mouth | 4 | 5 | 5 | 4 |

As seen from Table 8, all of thermal stability in shape retention, thermal unsusceptibility to water separation, milky flavor, body taste and meltability in the mouth of Example 5 using the vegetable fat containing many SUS, Example 4 using the vegetable oil containing many trans isomers, and Example 6 using the vegetable fat containing relatively many SUS and having a slightly lower melting point than that used in Example 5 in the chocolate-like foods are equal to or superior to those of Comparative Example 8 using the whipping cream (medium milk fat compounding type) alone.

### Example 7

According to a conventional method, chocolate was produced by formulating cacao mass, cocoa powder, cocoa butter, sugar, lecithin and vanillin as shown in Table 9. Then, the chocolate was pulverized and the pulverized product together with maltose (trade name, "SUNMALT-SHIRO" manufactured by HAYASHIBARA Co., Ltd.) were added to and mixed with fresh cream (trade name "HIGH FRESH NM" manufactured by Fuji Oil Company, Limited) which was warmed to 30°C, water, sweetened glucose liquid sugar (trade name, "HIGH FRACT M75" manufactured by Nihon Cornstarch Corporation) and an emulsifier (trade name, "RYOTO Sugar Ester S570" manufactured by Mitsubishi Chemical Foods Co., Ltd.) according to the formulation in Table 9.

The above-described mixture was stirred at 3,000 rpm with a homomixer ("T.K.HOMODISPER" manufactured by TOKUSYU KIKA KOUGYO Co., Ltd.) while warming, maintained at 65°C for 30 minutes and then cooled to obtain a low-water-content emulsion containing 22.1% by weight of a fat ingredient, 50.4% by weight of solids and 27.5% by weight of water.

The low-water-content emulsion thus obtained and whipping cream composed of vegetable fat (trade name, "LEGERE 20" manufactured by Fuji Oil Company, Limited) were mixed at a proportion of 50:50 and whipped with a vertical mixer ("HOBART MIXER-N-50" manufactured by HOBART JAPAN K.K.).

### Comparative Example 9

Only 100% by weight of whipping cream for chocolate cream (trade name, "GANACHE TOPPING DABEL" manufactured by Fuji Oil Company, Limited) was whipped with a vertical mixer.

The whipping cream for chocolate cream is that prepared by adding cacao solids and is cream capable of preparing chocolate cream only by whipping.

**Table 9**

| | Example 7 | Comparative Example 9 |
|---|---|---|
| <Formulation of chocolate-like food> | | |
| Cacao mass | 41.4 | |
| Cocoa powder | 2.4 | |
| Cocoa butter | 11.1 | |
| Sugar | 45.1 | |
| Lecithin | 0.5 | |
| Vanillin | 0.03 | |

| <Formulation of O/W emulsion> | | |
|---|---|---|
| Above-described chocolate-like food | 50.0 | |
| Fresh cream | 10.0 | |
| Maltose | 10.0 | |
| Sweetened glucose liquid sugar | 10.0 | |
| Water | 20.0 | |
| Emulsifier | 0.2 | |

| <Formulation of final product> | | |
|---|---|---|
| O/W emulsion | 50.0 | |
| Whipping cream (medium milk fat compounding type) | 50.0 | |
| Whipping cream DABEL) (GANACHE TOPPING | | 100.0 |

With respect to the respective whipping cream thus obtained, the workability, thermal stability in shape retention, thermal unsusceptibility to water separation, milky flavor, chocolate feeing, body taste and meltability in the mouth were evaluated by evaluation methods described below.

The results are shown in Table 10.

### Evaluation method

Chocolate feeling : The strength of chocolate flavor upon eating after whipping.

**Table 10**

| | Example 7 | Comparative Example 9 |
|---|---|---|
| Workability | 4 | 5 |
| Thermal stability in shape retention | 5 | 4 |
| Thermal unsusceptibility to water | 5 | 4 |
| separation | | |
| Milky flavor | 5 | 4 |
| Chocolate feeling | 5 | 3 |
| Body taste | 5 | 3 |
| Meltability in the mouth | 5 | 3 |

As seen from Example 7 and Comparative Example 9 in Table 10, tasty chocolate cream having good milky flavor, body taste, good meltability in the mouth and rich chocolate feeling was obtained by mixing the low-water-content emulsion having a higher amount of chocolate with whipping cream, followed by whipping as compared with whipping cream whose non-fat solids were limited, thereby limiting the amount of cacao ingredient to be formulated.

### Example 8

According a conventional method of chocolate production, a white chocolate-like food was produced by formulating whole milk powder, sugar, tempering type hard butter (trade name "MELANO NEWSS-5" manufactured by Fuji Oil Company, Limited) as vegetable fat and lecithin as shown in Table 11 and then pulverized. The pulverized product was added to and mixed with fresh cream (trade name, "HIGH FRESH NM" manufactured by Fuji Oil Company, Limited) warmed to 30°C, a 3-fold concentrated milk type food (trade name "PROBEST 400F" manufactured by Fuji Oil Company, Limited), water and an emulsifier (trade name, "RYOTO Sugar Ester S570" manufactured by Mitsubishi Chemical Foods Co., Ltd., HLB5) accordance with the formulation in Table 11.

The mixture was stirred at 3,000 rpm with a homomixer ("T.K.HOMODISPER" manufactured by TOKUSYU KIKA KOUGYO Co., Ltd.) while warming, maintained at 65°C for 30 minutes and then cooled to obtain an emulsion.

The emulsion thus obtained and water were mixed at a proportion of 90:10 and whipped using a vertical mixer ("HOBART MIXER N-50" manufactured by HOBART JAPAN K.K.).

### Example 9

The emulsion obtained in Example 8 and strawberry puree (TAKA Foods Industry Co., Ltd.) were mixed at a proportion of 60:40 and whipped with a vertical mixer ("HOBART MIXER N-50" manufactured by HOBART JAPAN K.K.).

### Example 10

The emulsion obtained in Example 8 and milk were mixed at a proportion of 70:30 and whipped with a vertical mixer ("HOBART MIXER N-50" manufactured by HOBART JAPAN K.K.).

**Table 11**

| | Example 8 | Example 9 | Example 10 |
|---|---|---|---|
| <Formulation of chocolate-like food> | | | |
| Whole milk powder | 15.9 | | |
| Sugar | 38.7 | | |
| Vegetable oil and fat | 45.4 | | |
| Lecithin | 0.3 | | |
| Above-described chocolate-like food | 70.0 | | |
| Fresh cream | 13.0 | | |
| 3-Fold concentrated milk type food | 7.0 | | |
| Water | 9.0 | | |
| Liqueur | 1.0 | | |
| Emulsifier | 0.2 | | |

| <Formulation of final product> | | | |
|---|---|---|---|
| Above-described O/W emulsion | 90.0 | 60.0 | 70.0 |
| Water | 10.0 | | |
| Strawberry puree | | 40.0 | |
| Milk | | | 30.0 |

The whipped fat composition obtained in Example 8 was a very light and fresh foam food with good meltability in the mouth. Further, the whipped fat composition of Example 9 was a fresh foam food with strong strawberry flavor, and the whipped fat composition of Example 10 was a food with pleasant milky flavor and light mouthfeel. All of these compositions were new whipped products whose mouthfeel and meltability in the mouth were different from a product obtained by whipping conventional whipping cream.

Further, the strawberry puree used in Example 9 and milk used in Example 10 as such had little whipping capability.

### Example 11

According to a conventional method, white chocolate was produced by formulating whole milk powder, cocoa butter as vegetable fat and lecithin as shown in Table 1 and formulating vanillin as shown in Table 11. The white chocolate was pulverized and the pulverized product together with vegetable fat (trade name, "PALM ACE 10", manufactured by Fuji Oil Company, Limited) were added to and mixed with a 3-fold concentrated milk (trade name "PROBEST 400F" manufactured by Fuji Oil Company, Limited) warmed at 30°C, water, reducing starch syrup (trade name "Amameal" manufactured by TOWA Chemical Industry Co., Ltd.) and an emulsifier (trade name, "RYOTO Sugar Ester S570" manufactured by Mitsubishi Chemical Foods Co., Ltd.) according to the formulation in Table 11.

The above-described mixture was stirred at 3,000 rpm with a homomixer ("T.K.HOMODISPER" manufactured by TOKUSYU KIKA KOUGYO Co., Ltd.) while warming, maintained at 65°C for 30 minutes and then cooled to obtain a low-water-content emulsion containing 30.3% by weight of a fat ingredient, 44.1% by weight of non-fat solids (non-fat milk solids were 12.5% by weight) and 25.6% by weight of water.

A soft ice cream mix composed of vegetable fat (trade name, "Soft Mix Vanilla 800" manufactured by Fuji Oil Company, Limited) and the above-described low-water-content emulsion were mixed at a proportion of 80:20 and a soft ice cream was obtained with a soft ice cream freezer (Soft Cream Freezer SSF-M153PN, manufactured by Sanyo Electric Co., Ltd.).

### Comparative Example 10

A soft ice cream was prepared by using only 100% by weight of the above-described soft ice cream mix with the soft ice cream freezer without addition of the low-water-content emulsion.

**Table 12**

| | Example 11 | Comparative Example 10 |
|---|---|---|
| <Formulation of white chocolate> | | |
| Whole milk powder | 28.0 | |
| Cocoa butter | 29.2 | |
| Sugar | 42.8 | |
| Lecithin | 0.5 | |
| Vanillin | 0.03 | |

| <Formulation of O/W emulsion> | | |
|---|---|---|
| Above-described chocolate | 50.0 | |
| Vegetable oil and fat | 10.0 | |
| 3-Fold concentrated milk | 20.0 | |
| Reducing starch syrup | 10.0 | |
| Water | 10.0 | |
| Emulsifier | 0.2 | |

| <Formulation of final product> | | |
|---|---|---|
| O/W emulsion | 20.0 | |
| Soft cream mix | 80.0 | 100.0 |

With respect to the soft ice cream thus obtained, milky flavor, body taste and meltability in the mouth were evaluated.

The results are shown in Table 13.

**Table 13**

| | Example 11 | Comparative Example 10 |
|---|---|---|
| Milky flavor | 5 | 4 |
| Body taste | 5 | 3 |
| Meltability in the mouth | 5 | 3 |

As seen from Example 11 and Comparative Example 10 in Table 12, all the milky flavor, body taste and meltability in the mouth were remarkably improved by addition of the low-water-content emulsion to obtain the soft ice cream having high commercial value, while cost is slightly raised.

### Example 12

According to a conventional manner, a white chocolate-like food was produced by formulating whole milk powder, sugar, tempering type hard butter (trade name, "MELANO NEWSS-5" manufactured by Fuji Oil Company, Limited) as vegetable fat and lecithin as shown in Table 14, and the white chocolate-like food was pulverized. The pulverized produce was added to and mixed with fresh cream (trade name, "HIGH FRESH NM" manufactured by Fuji Oil Company, Limited) warmed to 30°C, a 3-fold concentrated milk type food (trade name "PROBEST 400F" manufactured by Fuji Oil Company, Limited), water, and an emulsifier (trade name, "RYOTO Sugar Ester S570" manufactured by Mitsubishi Chemical Foods Co., Ltd.) as shown in Table 14.

The mixture was stirred at 3,000 rpm with a homomixer ("T.K.HOMODISPER" manufactured by TOKUSYU KIKA KOUGYO Co., Ltd., HLB5) while warming, maintained at 65°C for 30 minutes and then cooled to obtain an emulsion.

The emulsion thus obtained was whipped with a vertical mixer ("HOBART MIXER-N-50" manufactured by HOBART JAPAN K.K.).

**Table 14**

| | Example 12 |
|---|---|
| <Formulation of chocolate-like food> | |
| Whole milk powder | 15.9 |
| Sugar | 38.7 |
| Vegetable oil and fat | 45.4 |
| Above-described chocolate-like food | 70.0 |
| Fresh cream | 10.0 |
| Water | 20.0 |
| Emulsifier | 0.2 |

The whipped fat composition of Example 12 thus obtained was a very light fresh foam food with good meltability in the mouth.

## Claims

1. An O/W emulsion comprising 10 to 50% by weight of a fat ingredient, 10 to 50% by weight of water and 10 to 70% by weight of non-fat solids.

2. The O/W emulsion according to claim 1, wherein the proportion of non-fat milk solids or non-fat cacao solids to total non-fat solids is 5 to 50% by weight.

3. The O/W emulsion according to claim 1, wherein fat in the fat ingredient comprises a hard butter or triglycerides represented by SUS (S: saturated fatty acid, U: unsaturated fatty acid free from a trans isomer).

4. The O/W emulsion according to claim 1, which is to be used for addition to an aqueous composition.

5. The O/W emulsion according to claim 4, wherein the aqueous composition is a milk product.

6. The O/W emulsion according to claim 4, wherein the aqueous composition is a whipping fat composition.

7. The O/W emulsion according to claim 1, which is to be used by whipping.

8. A process for producing a diluted O/W emulsion, which comprises adding the O/W emulsion according to claim 1 to an aqueous composition.

9. The process according to claim 8, wherein the aqueous composition is a milk product.

10. The process according to claim 8, wherein the aqueous composition is a whipping fat composition.

11. A process for producing a whipped fat composition, which comprises adding the O/W emulsion according to claim 1 to an aqueous composition and whipping the resulting mixture.

12. A process for producing a whipped fat composition, which comprises whipping the O/W emulsion according to claim 1.
